# EUROPEAN PATENT APPLICATION

(11) **EP 2 375 308 A1**
(43) Date of publication of application: **12.10.2011**
(21) Application number: 10159422.4
(22) Date of filing: 08.04.2010
(51) Int. Cl.: G06F 3/01, G06F 3/048

(54) **Handheld device with localized tactile feedback**

(71) Applicant: Research in Motion Limited, Waterloo, Ontario N2L 3W8 (CA)
(72) Inventor: Kwok, Jordanna, Markham Ontario L3P 7J4 (CA); Grant, Christopher J., Waterloo Ontario N2L 5R9 (CA)
(74) Representative: Fennell, Gareth Charles

(57) **Abstract**

A method includes detecting a touch at a touch location on a touch-sensitive display of an electronic device, identifying a first tactile feedback associated with the touch location, and providing the first tactile feedback in response to determining that a force value related to the touch meets a first threshold value.

## Description

### FIELD OF TECHNOLOGY

The present disclosure relates to portable electronic devices, including but not limited to portable electronic devices having touch screen displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

Improvements in devices with touch-sensitive displays are desirable.

### SUMMARY

A method includes detecting a touch at a touch location on a touch-sensitive display of an electronic device, identifying a first tactile feedback associated with the touch location, and providing the first tactile feedback in response to determining that a force value related to the touch meets a first threshold value.

A computer-readable medium has computer-readable code executable by at least one processor of a portable electronic device to perform the above method.

An electronic device includes a touch-sensitive display configured to detect a touch at a touch location, an actuator, a force sensor configured to determine a force value related to the touch, and at least one processor operably connected to the touch-sensitive display, the actuator and the force sensor and configured to identify a first tactile feedback associated with the touch location and provide the first tactile feedback, utilizing the actuator, in response to determining that the force value meets a first threshold value.

### BRIEF DESCRIPTION OF THE DRAWINGS

FIG. 1 is a block diagram of a portable electronic device in accordance with the present disclosure.

FIG. 2 illustrates a front view of a portable electronic device in accordance with the present disclosure.

FIG. 3 illustrates a cross-sectional view through the line 202 of FIG. 2 in accordance with the present disclosure.

FIG. 4 is a block diagram showing components of the portable electronic device in accordance with the present disclosure;

FIG. 5 is a flowchart illustrating a method of providing tactile feedback at a portable electronic device in accordance with the present disclosure.

FIG. 6, FIG. 7, and FIG. 8 illustrate examples of touches on a touch-sensitive display of a portable electronic device in accordance with the present disclosure.

### DETAILED DESCRIPTION

The following describes an electronic device and a method including detecting a touch at a touch location on a touch-sensitive display of an electronic device, identifying a first tactile feedback associated with the touch location, and providing the first tactile feedback in response to determining that a force value meets the first threshold value.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

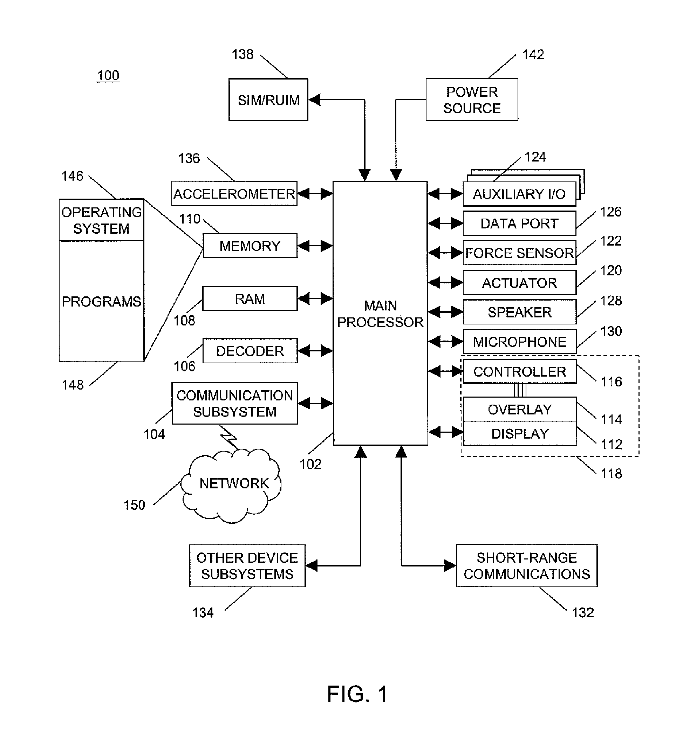

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, links, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. The overlay 114 may be an assembly of multiple layers in a stack including, for example, a substrate, LCD display 112, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The actuator 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 provides the user with tactile feedback.

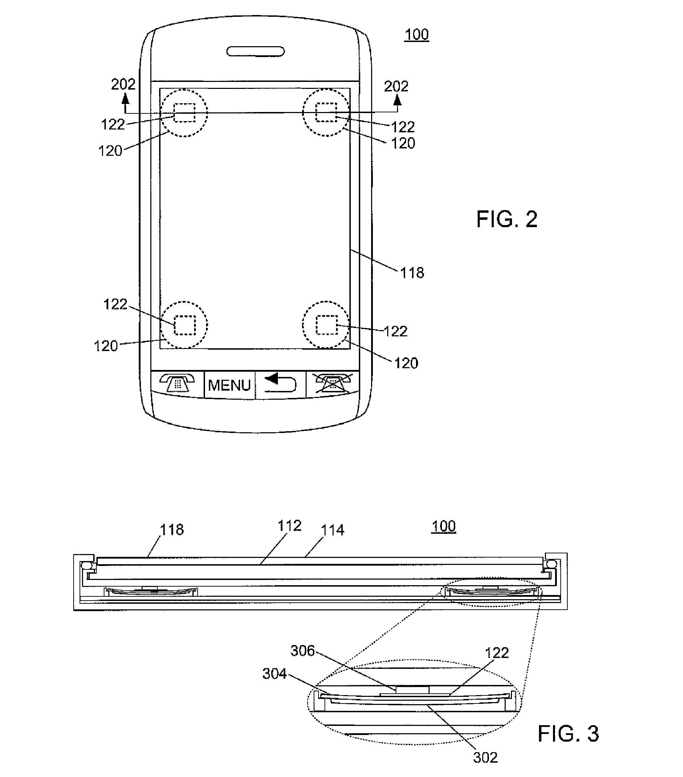

The actuator 120 may comprise one or more piezoelectric (piezo) actuators that provide tactile feedback. FIG. 2 is front view of an example of a portable electronic device 100. In the example shown in FIG. 2, the actuator 120 comprises four piezo actuators 120, each located near a respective corner of the touch-sensitive display 118. FIG. 3 is a sectional side view of the portable electronic device 100 through the line 202 of FIG 2. Each piezo actuator 120 is supported within the portable electronic device 100 such that contraction of the piezo actuators 120 applies a force against the touch-sensitive display 118, for example, opposing a force externally applied to the display 118. Each piezo actuator 120 includes a piezoelectric device 302, such as a piezoelectric disk that may be adhered to a metal substrate 304. An element 306 that is advantageously at least partially flexible and comprises, for example, hard rubber may be located between the piezoelectric device 302 and the touch-sensitive display 118. The element 306 does not substantially dampen the force applied to or on the touch-sensitive display 118. In the example shown in FIG. 2 and FIG. 3, the force sensor 122 comprises four force-sensors 122 located between the element 306 and the metal substrate 304. The force sensors 122 are utilized to determine a value representative of force at each of the force sensors 122 when an external force is applied to the touch-sensitive display 118. The metal substrate 304 bends when the piezoelectric device 302 contracts diametrically due to build up of charge/voltage at the piezoelectric device 302 or in response to an external force applied to the touch-sensitive display 118. The charge/voltage may be adjusted by varying the applied voltage or current, thereby controlling the force applied by the piezo actuators 120 on the touch-sensitive display 118. The charge/voltage on the piezo actuators 120 may be removed by a controlled discharge current/voltage that causes the piezoelectric devices 302 to expand diametrically, decreasing the force applied by the piezo actuators 120 on the touch-sensitive display 118. Absent an external force applied to the touch-sensitive display 118 and absent a charge/voltage on the piezoelectric device 302, the piezo actuator 120 may be slightly bent due to a mechanical preload.

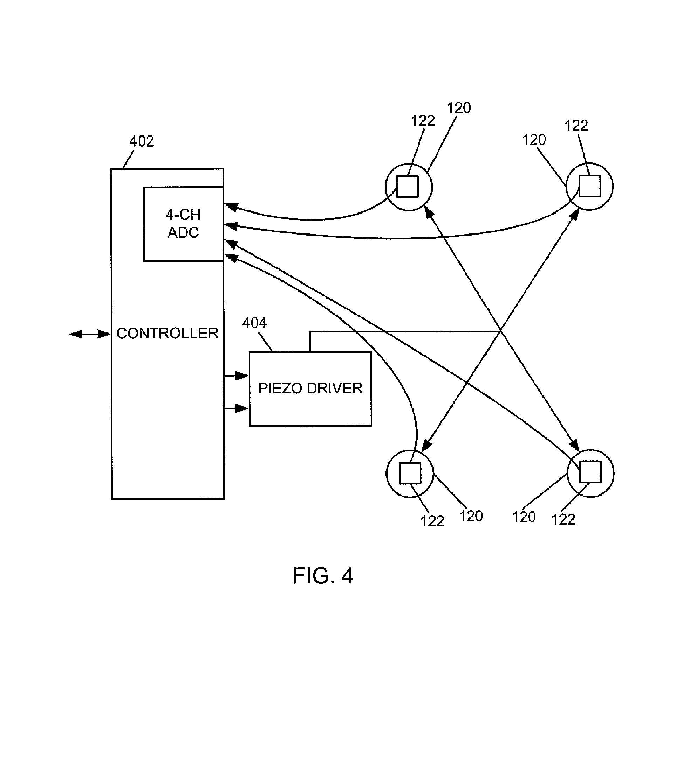

A block diagram of components of the portable electronic device 100 is shown in FIG. 4. In this example, each force sensor 122 is connected to a controller 402, which includes an amplifier and analog-to-digital converter (ADC). The force sensors 122 may be, for example, force sensing resistors in an electrical circuit such that the resistance changes with force imparted on the force sensors 122. As applied force to the touch-sensitive display 118 increases, the resistance decreases. This change is determined via the controller 116 for each of the force sensors 122, and a value representative of force at each of the force sensors 122 is determined. A force value related to the applied force of the touch may be determined utilizing the values representative of force from the force sensors 122.

The piezo actuators 120 are connected to a piezo driver 404 that communicates with the controller 402. The controller 402 is also in communication with the main processor 102 of the portable electronic device 100 and may receive and provide signals to and from the main processor 102. The piezo actuators 120 and the force sensors 122 are operatively connected to the main processor 102 via the controller 402. The controller 402 controls the piezo driver 404 that controls the current/voltage to the piezoelectric devices 302 and thus controls the charge/voltage and the force applied by the piezo actuators 120 on the touch-sensitive display 118. Each of the piezoelectric devices 302 may be controlled substantially equally and concurrently. Optionally, the piezoelectric devices 302 may be controlled separately. In the example described below, depression and release of a dome switch is simulated. Other switches, actuators, keys, and so forth may be simulated, or a non-simulated tactile feedback may be provided. When an applied force, on the touch-sensitive display 118 meets a depression threshold, the charge/voltage at the piezo actuators 120 is modulated to impart a force on the touch-sensitive display 118 to simulate depression of a dome switch. When the applied force, on the touch-sensitive display 118, meets a release threshold, after simulation of depression of a dome switch, the charge/voltage at the piezo actuators 120 is modulated to impart a force, by the piezo actuators 120, to simulate release of a dome switch. A value meets a threshold when the value is at or beyond the threshold.

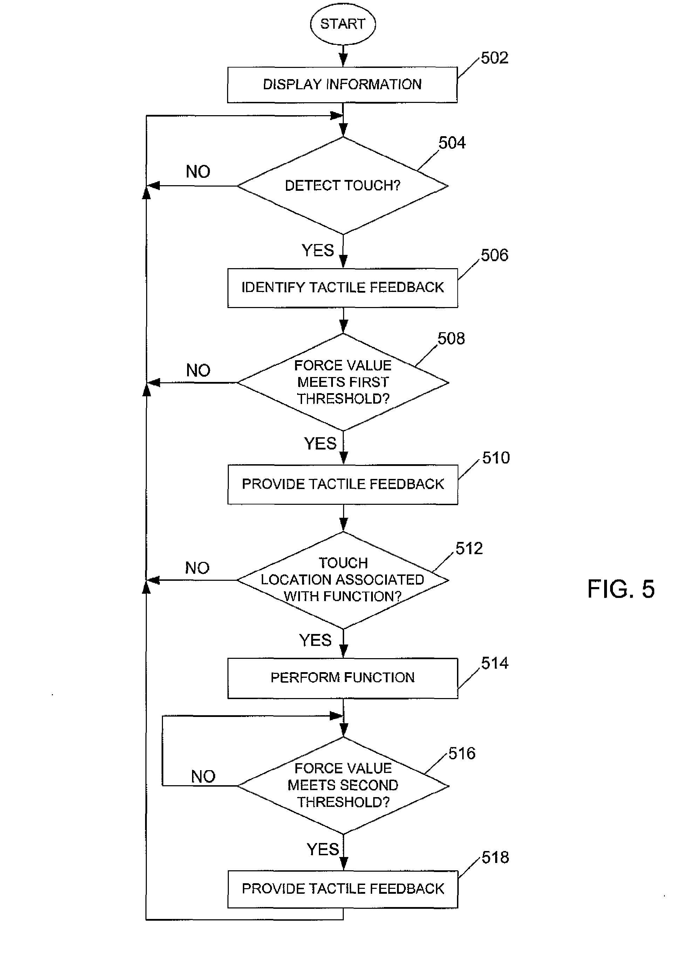

A flowchart illustrating a method of providing tactile feedback at the electronic device 100 is shown in FIG. 5. The method may be carried out by software executed by, for example, the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium.

Information is displayed 502 on the display 112. The information may be from an application, such as a web browser, contacts, email, calendar, music player, spreadsheet, word processing, operating system interface, and so forth.

When a touch is detected 504 at a touch location on the touch-sensitive display 118, tactile feedback is identified 506. The tactile feedback is based on the touch location and may be identified utilizing, for example, a look-up table, or any other suitable method of associating the tactile feedback with locations on the touch-sensitive display 118. The processor 102 generates and provides one or more actuation signals to the actuators 120 to provide tactile feedback to the touch-sensitive display 118. The actuation signal may comprise voltage waveforms or signals that drive the actuators 120. Data representing the voltage waveforms or signals may be stored in memory 110 such that the processor 102 retrieves the data and generates the actuation signals. The tactile feedback may simulate actuation of a switch, vibrate the touch-sensitive display, create a pulse, or create any other suitable tactile feedback or combination of types of tactile feedback. The type of tactile feedback, the magnitude of the force, and the duration of time during which tactile feedback is provided may vary based on the touch location.

A force value related to the on the touch-sensitive display 118, based on signals from the force sensors 122, is compared 508 to the depression force threshold and when the force value does not meet the depression force threshold, the process continues at 504. When the force value meets the depression force threshold, the process continues at 510. The force value may be repeatedly determined, e.g., at a predetermined sample rate. The tactile feedback, identified at 506 based on the touch location, is provided 510 utilizing the piezoelectric actuators 120.

When the touch location is associated with a function, as determined at 512, the function is performed 514. The function may include, for example, selection of a feature that is associated with the touch location on the touch-sensitive display 118. The force value is compared 516 to the release force threshold. When the force value meets the release force threshold, tactile feedback may be provided 518.

The depression and release force thresholds may also be based on the location of the touch on the touch-sensitive display such that the thresholds may be higher for a touch at one area than the thresholds at another area of the touch-sensitive display.

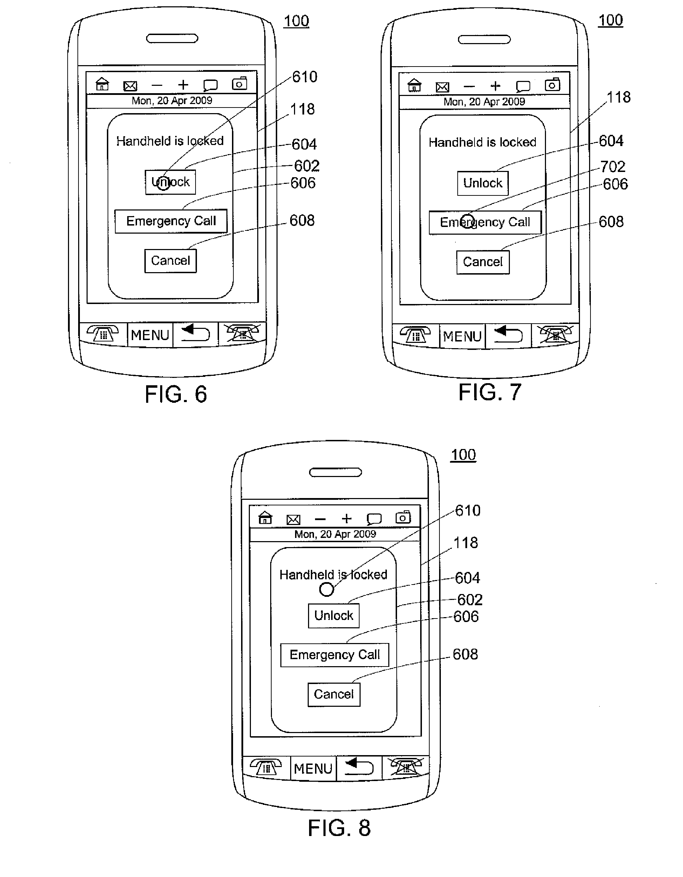

Examples of touches on a touch-sensitive display 118 of a portable electronic device 100 are shown in FIG. 6, FIG. 7, and FIG. 8. In these examples, the portable electronic device 118 is locked, for example, to inhibit inadvertent selections. The menu 602 shown in FIG. 6 and FIG. 7 may be displayed in response to, for example, detecting a touch on the touch-sensitive display 118. Three menu options are displayed on the touch-sensitive display 118, including an "Unlock" option 604 to unlock the portable electronic device 100 for use, an "Emergency call" option 606 to make, for example, a 911 call, and a "Cancel" option 608 to exit the menu.

In the example of FIG. 6, a touch 610 is detected at a touch location that is associated with the "Unlock" option 604. The tactile feedback associated with the touch location is identified by retrieving the data representing the voltage waveforms or signals from memory. For the purpose of the present example, the tactile feedback associated with the touch location is the simulation of actuation of a switch. When the force value meets the depression force threshold, the tactile feedback is provided by applying the actuation signal generated from the data to charge and discharge the piezo actuators 120 to simulate depression of a switch. The portable electronic device 100 is unlocked. The force value is reduced as the touch is removed from the touch-sensitive display 118. When the force value meets the release force threshold, tactile feedback is provided by applying another actuation signal to the actuators 120 to simulate release of the switch.

In the example of FIG. 7, a touch 702 is detected at a touch location that is associated with the "Emergency Call" option 606. The tactile feedback associated with the touch location is identified by retrieving the data representing the voltage waveforms or signals from memory. For the purpose of the present example, the tactile feedback associated with the touch location is the simulation of actuation of a switch. When the force value meets the depression force threshold, the tactile feedback is provided by applying the actuation signal to the actuators 120 to simulate depression of a switch. An emergency call is made. In the example shown in FIG. 7, the highest applied voltage and the highest charge/voltage at the piezo actuators 120 is greater than the highest applied voltage and the highest charge/voltage at the piezo actuators 120 in the example described above with reference to FIG. 6. Because the force is related to the charge/voltage, the force imparted by the piezo actuators 120 on the touch-sensitive display 118 is greater in the example of FIG. 7 as compared to the example of FIG. 6. The difference in force imparted by the piezo actuators 120 provides different tactile feedback. The force value is reduced as the touch is removed from the touch-sensitive display 118. When the force value meets the release force threshold, a further tactile feedback is provided by applying an actuation signal to the actuators 120 to simulate release of the switch. The highest applied voltage and the highest charge/voltage at the piezo actuators 120 is greater than the highest applied voltage and the highest charge/voltage at the piezo actuators 120 in the example described above with reference to FIG. 6. The force imparted by the piezo actuators 120 on the touch-sensitive display 118 is greater in the example of FIG. 7 and the difference in applied force provides different tactile feedback. Because the voltage at the piezo actuators 120 typically ramps up and down, the highest applied voltage is utilized for reference purposes.

In the example of FIG. 8, a touch 802 is detected at a touch location that is not associated with a selection option. The tactile feedback associated with the touch location is identified by retrieving the data representing the voltage waveforms or signals from memory. For the purpose of the present example, the tactile feedback associated with the touch location is a vibration to indicate that a selection option has not been selected. When the force value meets the depression force threshold, the tactile feedback is provided by applying an actuation signal to charge and discharge the piezo actuators 120 to vibrate the touch-sensitive display 118. The applied force to the touch-sensitive display 118 is reduced as the user removes their finger from the touch-sensitive display 118. When the force value meets the release force threshold, the vibration is discontinued.

Optionally, a location that is not associated with a selectable feature or option may be associated with a lack of tactile feedback, such that the piezo actuators 120 are not charged or discharged in response to a touch at the location.

Tactile feedback may vary for different locations on the touch-sensitive display. Different tactile feedback may be utilized and provided based on touch location, for example, to confirm selection of a feature or features on the portable electronic device 100. Touch location-based Tactile feedback provides confirmation of selection. Selection errors may be detected based on the tactile feedback and may be quickly corrected, prior to further selections being made or, for example, an emergency call being connected.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

**1.** A method comprising:
detecting a touch at a touch location on a touch-sensitive display;
identifying a first tactile feedback associated with the touch location;
providing the first tactile feedback in response to determining that a force value meets a first threshold value.

**2.** The method according to claim 1, comprising determining the force value prior to providing tactile feedback and comparing the value to the first threshold value.

**3.** The method according to claim 1, comprising repeatedly determining the force value.

**4.** The method according to claim 1, comprising comparing the force value to a second threshold after providing the first tactile feedback.

**5.** The method according to claim 1, comprising providing a second tactile feedback when the force value meets a second threshold value, after providing the first tactile feedback.

**7.** The method according to claim 1, comprising displaying information on the touch-sensitive display prior to detecting the touch.

**8.** The method according to claim 1, wherein the first threshold value is associated with an area that is associated with information displayed on the touch-sensitive display.

**9.** The method according to claim 1, comprising performing a function associated with the touch location in response to determining that the force value meets the first threshold value.

**10.** The method according to claim 1, wherein the first tactile feedback is provided utilizing an actuator arranged and constructed to apply a force on the touch-sensitive display.

**11.** The method according to claim 1, wherein the first tactile feedback comprises simulation of depression of a switch.

**12.** The method according to claim 1, comprising:
detecting a second touch at a second touch location on the touch-sensitive display
identifying a second tactile feedback associated with the second touch location;
providing the second tactile feedback in response to determining that a second force value related to the second touch meets the first threshold value, the second tactile feedback being different from the first tactile feedback.

**13.** The method according to claim 12, comprising:
providing a further tactile feedback in response to determining that a further force value related to the second touch meets a second threshold value.

**14.** A computer-readable medium having computer-readable code executable by at least one processor of a portable electronic device to perform the method of claim 1.

**15.** An electronic device comprising:
a touch-sensitive display configured to detect a touch at a touch location;
an actuator;
a force sensor configured to determine a force value related to the touch;
at least one processor operably connected to the touch-sensitive display, the actuator, and the force sensor and configured to identify a first tactile feedback associated with the touch location and provide the first tactile feedback, utilizing the actuator, in response to determining that the force value meets a first threshold value.

**16.** The electronic device according to claim 15, comprising a memory operatively coupled to the at least one processor, the memory having data, for providing the first tactile feedback, stored in association with the touch location.

**17.** The electronic device according to claim 16, wherein the data is stored, in association with the touch location, in a look-up table.

**18.** The electronic device according to claim 15, wherein the actuator comprises a piezoelectric actuator.

**19.** The electronic device according to claim 15, wherein the actuator comprises a plurality of piezoelectric actuators.

## Amended claims

### Amended claims in accordance with Rule 137(2) EPC.

**1.** A method comprising:
detecting a touch at a touch location on a touch-sensitive display (118);
identifying a first tactile feedback associated with the touch location;
providing the first tactile feedback in response to determining that a force value meets a first threshold value;
wherein, when the touch location is not associated with a selectable feature, the first tactile feedback is different than the first tactile feedback when the touch location is associated with the selectable feature.

**2.** The method according to claim 1, comprising determining the force value prior to providing tactile feedback and comparing the value to the first threshold value.

**3.** The method according to claim 1, comprising repeatedly determining the force value.

**4.** The method according to claim 1, comprising comparing the force value to a second threshold after providing the first tactile feedback.

**5.** The method according to claim 1, comprising, in response to the force value meeting a second threshold value after providing the first tactile feedback, the first tactile feedback ends when the touch location is not associated with the selectable feature and a second tactile feedback is provided when the touch location is associated with the selectable feature.

**6.** The method according to claim 1, comprising displaying information on the touch-sensitive display (118) prior to detecting the touch.

**7.** The method according to claim 1, wherein the first threshold value is associated with an area that is associated with information displayed on the touch-sensitive display (118).

**8.** The method according to claim 1, comprising performing a function associated with the touch location in response to determining that the force value meets the first threshold value.

**9.** The method according to claim 1, wherein the first tactile feedback is provided utilizing an actuator (120) arranged and constructed to apply a force on the touch-sensitive display.

**10.** The method according to claim 1, wherein the first tactile feedback comprises simulation of depression of a switch when the touch location is associated with the selectable feature.

**11.** The method according to claim 1, comprising:
detecting a second touch at a second touch location on the touch-sensitive display (118)
in response to determining that the second touch location is associated with a second selectable feature, identifying a second tactile feedback associated with the second touch location;
providing the second tactile feedback in response to determining that a second force value related to the second touch meets the first threshold value, the second tactile feedback being different from the first tactile feedback.

**12.** The method according to claim 11, comprising:
providing a further tactile feedback in response to determining that a further force value related to the second touch meets a second threshold value.

**13.** A computer-readable medium having computer-readable code executable by at least one processor (102) of a portable electronic device (100) to perform the method of any of the claims 1 to 12.

**14.** An electronic device (100) comprising:
a touch-sensitive display (118) configured to detect a touch at a touch location;
an actuator (120);
a force sensor (122) configured to determine a force value related to the touch;
at least one processor (102) operably connected to the touch-sensitive display (118), the actuator (120), and the force sensor (122) and configured to identify a first tactile feedback associated with the touch location and provide the first tactile feedback, utilizing the actuator (120), in response to determining that the force value meets a first threshold value;
wherein the first tactile feedback when the touch location not associated with a selectable feature is different than the first tactile feedback when the touch location is associated with the selectable feature.

**15.** The electronic device (100) according to claim 14, comprising a memory (110) operatively coupled to the at least one processor (102), the memory (110) having data, for providing the first tactile feedback, stored in association with the touch location.

**16.** The electronic device (100) according to claim 15, wherein the data is stored, in association with the touch location, in a look-up table.

**17.** The electronic device (100) according to claim 14, wherein the actuator (120) comprises a piezoelectric actuator.

**18.** The electronic device (100) according to claim 14, wherein the actuator (120) comprises a plurality of piezoelectric actuators.
